# EUROPEAN PATENT SPECIFICATION

(11) **EP 2 860 863 B1**
(45) Date of publication and mention of the grant of the patent: **14.02.2018**
(21) Application number: 13804400.3
(22) Date of filing: 16.08.2013
(51) Int. Cl.: H02M 1/12

(54) **SURGE PROTECTION CIRCUIT**
ÜBERSPANNUNGSSCHUTZSCHALTUNG
CIRCUIT DE PROTECTION CONTRE LES SURTENSIONS

(30) Priority: 12.11.2012 CN 201210453846
(43) Date of publication of application: 15.04.2015
(73) Proprietor: ZTE Corporation, Guangdong Province 518057 (CN)
(72) Inventor: WAN, Zhenghai, Shenzhen City Guangdong Province 518057 (CN); LI, Junkai, Shenzhen City Guangdong Province 518057 (CN); PU, Xifeng, Shenzhen City Guangdong Province 518057 (CN); LI, Dan, Shenzhen City Guangdong Province 518057 (CN)
(74) Representative: Novagraaf Technologies
(86) International application number: PCT/CN2013/081672
(87) International publication number: WO 2013/185736

(56) References cited:
- EP-A1- 2 330 732
- CN-A- 1 855 658
- CN-A- 101 645 649
- CN-A- 101 919 149
- CN-U- 201 440 610
- CN-U- 201 440 610
- US-B1- 6 411 535

## Description

### Technical Field

The present invention relates to the field of the input surge technology of switching power source, and in particular, to a surge protection circuit.

### Background of the Related Art

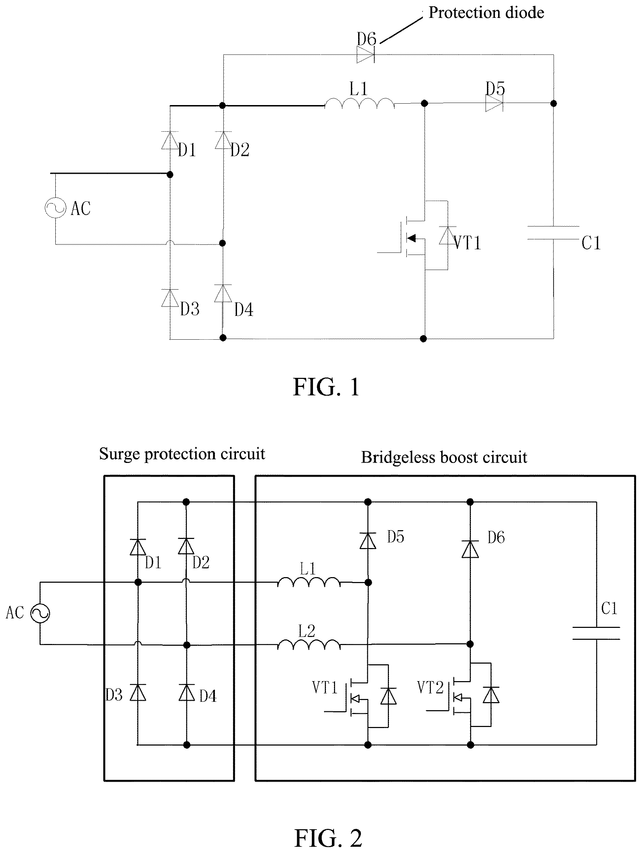

The modern mobile communication technology is being developed forward with a unprecedented speed, and the communication base station essential for the modern communication is easy to be influenced by the abominable external conditions (such as, the weather and the geographical position, etc.); and the communication power supply that supplies power for the communication base station will be influenced by these factors as well, so the design of the surge protection system is required to be performed when designing the communication power supply, to try hard to reduce the harmful influence brought by the lightning surge to the communication power supply. FIG. 1 and FIG. 2 are the surge protection circuits of the traditional boost circuit and the bridgeless boost circuit respectively. The surge protection circuit of FIG. 1 and FIG. 2 mainly utilizes the capacitor C1 to absorb the surge current, and the capacity of the capacitor C1 is required to be relatively large.

The document US2011134671A1 discloses a preloading circuit for a bridgeless boost converter in an AC/DC converter, including a first diode D1 having its anode connected to a first AC input terminal of the AC/DC converter and having its cathode connected to a first DC output terminal of the AC/DC converter, a second diode D2 having its anode connected to a second AC input terminal of the AC/DC converter and having its cathode connected to the first DC output terminal of the AC/DC converter, a first switch S1 having one end connected to said first AC input terminal of the AC/DC converter and having its other end connected to a second DC output terminal of the AC/DC converter, and a second switch S2 having one end connected to said second AC input terminal of the AC/DC converter and having its other end connected to said second DC output terminal of the AC/DC converter.

The document CN201440610U discloses an anti-electrical surge and anti-rapid pulse PFC circuit, which comprises a rectifier filtering circuit that is electrically connected with the power source and a voltage boosting circuit that is connected with the rectifier filtering circuit; and the voltage boosting circuit comprises electrical inductance, a voltage boosting diode, and an MOS tube which are tandem connected; the characteristics of the anti-electrical surge and anti-rapid pulse PFC circuit are as follows: the PFC circuit also comprises a first absorbing unit which is connected between live wire and zero wire, a second absorbing unit which is connected with a rectifier bridge of the rectifier filtering circuit in parallel, a third absorbing unit which is connected with filter capacitor of the rectifier filtering circuit in parallel, a fourth absorbing unit which is connected with the voltage boosting diode in parallel, and a fifth absorbing unit which is connected between the source electrode and the drain electrode of the MOS tube. The anti-electrical surge and anti-rapid pulse PFC circuit has effect anti-electrical surge and anti-rapid pulse advantages.

### Content of the Invention

The embodiment of the present invention provides a surge protection circuit according to claim 1 and a surge protection circuit according to claim 7, to provide a new solution for the surge protection. Further improvements and embodiments are provided in the dependent claims.

Also provided is a surge protection circuit, comprising a bridgeless boost sub-circuit and a surge protection sub-circuit, wherein,
the bridgeless boost sub-circuit comprises a first connection end and a second connection end of an alternating current power source, an inductor 1, an inductor 2, a switching tube 1 with a damping diode, a switching tube 2 with a damping diode, a capacitor 1, a diode 5, and a diode 6; one end of the inductor 1 is connected to the first connection end of the alternating current power source, another end of the inductor 1 is connected to a positive pole of the diode 5 and a negative pole of the switching tube 1 with the damping diode, one end of the inductor 2 is connected to the second connection end of the alternating current power source, another end of the inductor 2 is connected to a positive pole of the diode 6 and a negative pole of the switching tube 2 with the damping diode, one end of the capacitor 1 is connected to a negative pole of the diode 5 and a negative pole of the diode 6, and another end of the capacitor 1 is connected to a positive pole of the switching tube 1 with the damping diode and a positive pole of the switching tube 2 with the damping diode;
the surge protection sub-circuit comprises a first connection end and a second connection end of an alternating current power source, a diode 1, a diode 2, a transistor 3 and a transistor 4; a positive pole of the diode 1 is connected to the first connection end of the alternating current power source, a positive pole of the diode 2 is connected to a second connection end of the alternating current power source, a negative pole of the transistor 3 is connected to the first connection end of the alternating current power source, and a negative pole of the transistor 4 is connected to the second connection end of the alternating current power source; and
the surge protection sub-circuit further comprises a surge buffer device, one end of the surge buffer device is connected to a negative pole of the diode 1 and a negative pole of the diode 2, and another end of the surge buffer device is connected to a positive pole of the transistor 3 and a positive pole of the transistor 4.

Alternatively, the above-mentioned circuit further can have the following characteristics:
both the switching tube 1 with the damping diode and the switching tube 2 with the damping diode are N channel metal oxide semiconductors (MOS) tube with the damping diodes.

Alternatively, the above-mentioned circuit further can have the following characteristics:
the surge buffer device is a capacitor 2 and a resistance 2 which are parallel.

Alternatively, the above-mentioned circuit further can have the following characteristics:
the surge buffer device is a piezoresistor.

Alternatively, the above-mentioned circuit further can have the following characteristics:
the transistor 3 and the transistor 4 are diodes.

Alternatively, the above-mentioned circuit further can have the following characteristics:
the transistor 3 and the transistor 4 are switching tubes with the damping diodes.

Alternatively, the above-mentioned circuit further can have the following characteristics:
the switching tube with the damping diode is a N channel MOS tube with the damping diode.

Alternatively, the above-mentioned circuit further can have the following characteristics:
the transistor 3 and the transistor 4 are Insulated Gate Bipolar Transistors (IGBT) with the damping diodes.

Also provided is a surge protection circuit, comprising a surge protection sub-circuit, wherein,
the surge protection sub-circuit comprises a first connection end and a second connection end of an alternating current power source, a diode 1, a diode 2, a transistor 3 and a transistor 4; a positive pole of the diode 1 is connected to the first connection end of the alternating current power source, a positive pole of the diode 2 is connected to a second connection end of the alternating current power source, a negative pole of the transistor 3 is connected to the first connection end of the alternating current power source, and a negative pole of the transistor 4 is connected to the second connection end of the alternating current power source; and
the surge protection sub-circuit further comprises a surge buffer device, one end of the surge buffer device is connected to a negative pole of the diode 1 and a negative pole of the diode 2, and another end of the surge buffer device is connected to a positive pole of the transistor 3 and a positive pole of the transistor 4.

Alternatively, the above-mentioned circuit further can have the following characteristics:
the surge buffer device is a capacitor 2 and a resistance 2 or a piezoresistor which are parallel; and
the transistor 3 and the transistor 4 are diodes, switching tubes with damping diodes or Insulated Gate Bipolar Transistors (IGBT) with the damping diodes.

In the present scheme, the surge current is absorbed by utilizing the surge buffer device, and the surge buffer device is not in the main topology circuit. For example, when the surge buffer device is the capacitor C2, compared to the C1 in FIG. 1 and FIG. 2, the capacity of the C2 is smaller, and the volume is smaller as well.

### Brief Description of Drawings

FIG. 1 is a structure diagram of a surge protection circuit of a traditional boost circuit;
FIG. 2 is a structure diagram of a surge protection circuit of a bridgeless boost circuit in the related art;
FIG. 3 is a structure diagram of a surge protection circuit according to embodiment one of the present invention;
FIG. 4 is a diagram of a positive surge propagation of a surge protection circuit passing through FIG. 3 according to an embodiment of the present invention;
FIG. 5 is a diagram of a negative surge propagation of a surge protection circuit passing through FIG. 3 according to an embodiment of the present invention;
FIG. 6 is a structure diagram of a surge protection circuit according to embodiment two of the present invention;
FIG. 7 is a structure diagram of a surge protection circuit according to embodiment four of the present invention;
FIG. 8 is a structure diagram of a surge protection circuit according to embodiment five of the present invention.

### Preferred Embodiments of the Present Invention

The surge protection circuit in the present scheme includes a bridgeless boost sub-circuit and a surge protection sub-circuit.

The bridgeless boost sub-circuit includes a first connection end and a second connection end of an alternating current power source, an inductor 1, that is, LI, an inductor 2, that is, L2, a switching tube 1 with a damping diode, a switching tube 2 with a damping diode, a capacitor 1, that is, C1, a diode 5, that is, D5, and a diode 6, that is, D6; one end of the L1 is connected to the first connection end of the alternating current power source, the other end is connected to a positive pole of the D5 and a negative pole of the switching tube 1 with the damping diode, one end of the inductor 2 is connected to the second connection end of the alternating current power source, the other end is connected to a positive pole of the D6 and a negative pole of the switching tube 2 with the damping diode, one end of the capacitor 1 is connected to a negative pole of the D5 and a negative pole of the D6, and the other end of the capacitor 1 is connected to a positive pole of the switching tube 1 with the damping diode and a positive pole of the switching tube 2 with the damping diode. Wherein, the switching tube 1 with the damping diode and the switching tube 2 with the damping diode can be N channel metal oxide semiconductor (MOS) tubes with the damping diodes.

The surge protection sub-circuit includes a first connection end and a second connection end of an alternating current power source, a diode 1, that is, D1, a diode 2, that is, D2, a transistor 3 and a transistor 4. A positive pole of the D1 is connected to the first connection end of the alternating current power source, a positive pole of the D2 is connected to a second connection end of the alternating current power source, a negative pole of the transistor 3 is connected to the first connection end of the alternating current power source, and a negative pole of the transistor 4 is connected to the second connection end of the alternating current power source.

The surge protection sub-circuit further includes a surge buffer device, one end of the surge buffer device is connected to a negative pole of the D1 and a negative pole of the D2, and the other end of the surge buffer device is connected to a positive pole of the transistor 3 and a positive pole of the transistor 4.

The surge buffer device can be a capacitor 2 and a resistance 2 which are parallel.

The surge buffer device can be a piezoresistor.

The transistor 3 and the transistor 4 can be the diodes. The encapsulations of the diodes in the surge protection sub-circuit can be adjusted, for example, a rectifier bridge or an independently encapsulated diode can be used.

The transistor 3 and the transistor 4 can be the switching tubes with the damping diodes, for example, the N channel MOS tubes with the damping diodes.

It is explained in detail through four embodiments hereinafter.

### Embodiment one

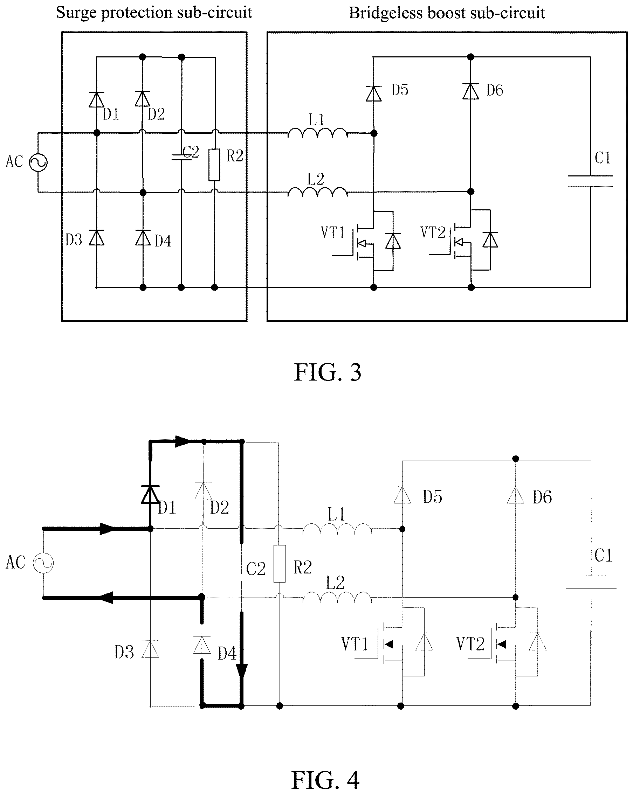

As shown in FIG. 3, the surge buffer device is a filter capacitor C2 and a discharge resistance R2 which are parallel, the transistor 3 is the diode D3, and the transistor 4 is the diode D4. The D3 and the D4 are not only the return pipes of the bridgeless boost sub-circuit but also the surge protection diodes. Through adding the C2 and the R2 which are parallel, the input surge energy is absorbed through the C2 and then discharged through the R2 in the present embodiment. The D1, D2, D3 and D4 can be the rectifier bridge stack, and can also be the independently encapsulated diodes.

When the positive surge current reaches the AC input end, the breakover path of the surge current is as shown in FIG. 4, which avoids that a large amount of surge currents pass through the boost diode and the switching tube in the bridgeless boost sub-circuit in this way, thus playing the function of protecting the device.

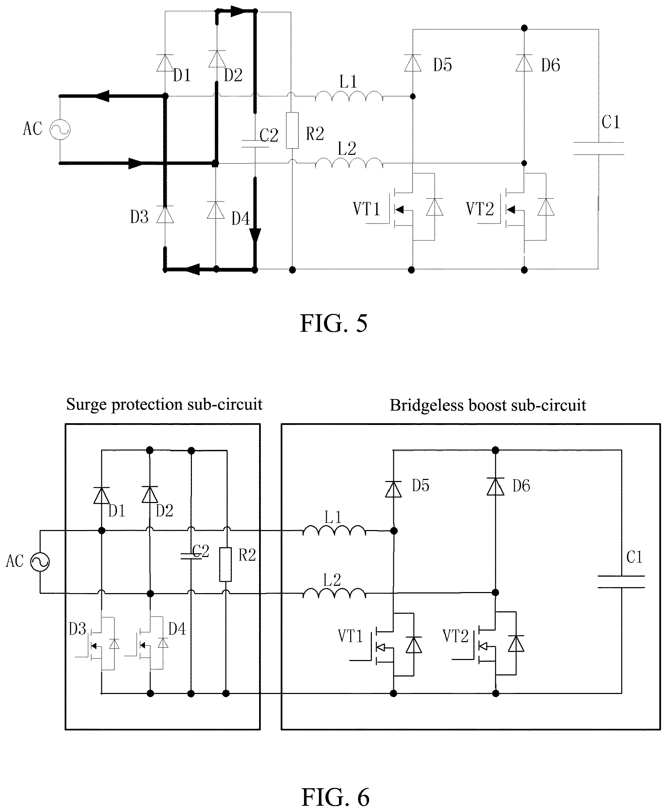

When the negative surge current reaches the AC input end, the breakover path of the surge current is as shown in FIG. 5, which avoids that a large amount of surge currents pass through the boost diode and the switching tube in the bridgeless boost sub-circuit in this way, thus playing the function of protecting these devices.

### Embodiment two

As shown in FIG. 6, the surge buffer device is the C2 and the R2 which are parallel, and the transistor 3 and the transistor 4 are the N channel MOS tubes with the damping diodes. The operating principle of embodiment two is the same with the embodiment one, and will no longer go into details here.

### Embodiment three

In embodiment three, the surge buffer device is the C2 and the R2 which are parallel, and the transistor 3 and the transistor 4 are the Insulated Gate Bipolar Transistors (IGBT) with the damping diodes. The operating principle of embodiment three is the same with the embodiment one, and will no longer go into details here.

### Embodiment four

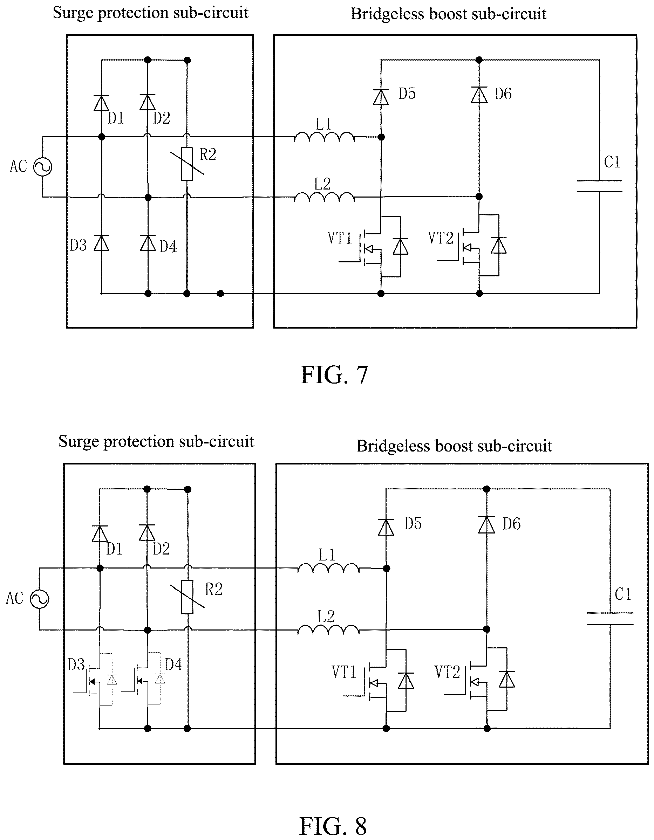

As shown in FIG. 7, the surge buffer device is a piezoresistor, and the transistor 3 and the transistor 4 are the diodes. The piezoresistor plays a role of discharging the energy. The operating principle of embodiment four is the same with the embodiment one, and will no longer go into details here. The D3 and/or the D4 not only serve as the return pipes of the bridgeless boost sub-circuit, but also serve as the surge protection diodes.

### Embodiment five

As shown in FIG. 8, the surge buffer device is a piezoresistor, and the transistor 3 and the transistor 4 are the N channel MOS tubes with the damping diodes. The operating principle of embodiment five is the same with the embodiment one, and will no longer go into details here.

### Embodiment six

In embodiment six, the surge buffer device is a piezoresistor, and the transistor 3 and the transistor 4 are the IGBTs with the damping diodes. The operating principle of embodiment six is the same with the embodiment one, and will no longer go into details here.

In the present scheme, the surge current is absorbed by utilizing the surge buffer device, and the surge buffer device is not in the main topology circuit. For example, when the surge buffer device is the capacitor C2, compared to the C1 in FIG. 1 and FIG. 2, the capacity of the C2 is smaller, and the volume is smaller as well.

It should be illustrated that, in the case of not conflicting, the embodiments in the present application and features in these embodiments can be combined with each other.

### Industrial Applicability

In the present scheme, the surge current is absorbed by utilizing the surge buffer device, and the surge buffer device is not in the main topology circuit.

## Claims

1. A surge protection circuit, comprising a bridgeless boost sub-circuit and a surge protection sub-circuit, wherein,
the bridgeless boost sub-circuit comprises a first connection end and a second connection end of an alternating current power source, an inductor 1, an inductor 2, a switching tube 1 with a damping diode, a switching tube 2 with a damping diode, a capacitor 1, a diode 5, and a diode 6; one end of the inductor 1 is connected to the first connection end of the alternating current power source, another end of the inductor 1 is connected to a positive pole of the diode 5 and a negative pole of the switching tube 1 with the damping diode, one end of the inductor 2 is connected to the second connection end of the alternating current power source, another end of the inductor 2 is connected to a positive pole of the diode 6 and a negative pole of the switching tube 2 with the damping diode, one end of the capacitor 1 is connected to a negative pole of the diode 5 and a negative pole of the diode 6, and another end of the capacitor 1 is connected to a positive pole of the switching tube 1 with the damping diode and a positive pole of the switching tube 2 with the damping diode;
the surge protection sub-circuit comprises a first connection end and a second connection end of an alternating current power source, a diode 1, a diode 2, a transistor 3 and a transistor 4; a positive pole of the diode 1 is connected to the first connection end of the alternating current power source, a positive pole of the diode 2 is connected to a second connection end of the alternating current power source, a negative pole of the transistor 3 is connected to the first connection end of the alternating current power source, and a negative pole of the transistor 4 is connected to the second connection end of the alternating current power source; and **characterized in that**,
the surge protection sub-circuit further comprises a surge buffer device, one end of the surge buffer device is connected to a negative pole of the diode 1 and a negative pole of the diode 2, and another end of the surge buffer device is connected to a positive pole of the transistor 3 and a positive pole of the transistor 4; wherein, the surge buffer device is a capacitor 2 and a resistance 2 which are parallel.

2. The circuit according to claim 1, wherein,
both the switching tube 1 with the damping diode and the switching tube 2 with the damping diode are N channel metal oxide semiconductors (MOS) tube with the damping diodes.

3. The circuit according to any one of claims 1 to 2, wherein,
the transistor 3 and the transistor 4 are diodes.

4. The circuit according to any one of claims 1 to 2, wherein,
the transistor 3 and the transistor 4 are switching tubes with the damping diodes.

5. The circuit according to claim 4, wherein,
the switching tube with the damping diode is a N channel MOS tube with the damping diode.

6. The circuit according to any one of claims 1 to 2, wherein,
the transistor 3 and the transistor 4 are Insulated Gate Bipolar Transistors (IGBT) with the damping diodes.

7. A surge protection circuit, comprising a surge protection sub-circuit, wherein,
the surge protection sub-circuit comprises a first connection end and a second connection end of an alternating current power source, a diode 1, a diode 2, a transistor 3 and a transistor 4; a positive pole of the diode 1 is connected to the first connection end of the alternating current power source, a positive pole of the diode 2 is connected to a second connection end of the alternating current power source, a negative pole of the transistor 3 is connected to the first connection end of the alternating current power source, and a negative pole of the transistor 4 is connected to the second connection end of the alternating current power source; and **characterized in that**,
the surge protection sub-circuit further comprises a surge buffer device, one end of the surge buffer device is connected to a negative pole of the diode 1 and a negative pole of the diode 2, and another end of the surge buffer device is connected to a positive pole of the transistor 3 and a positive pole of the transistor 4; wherein, the surge buffer device is a capacitor 2 and a resistance 2 which are parallel..

8. The circuit according to claim 7, wherein,
the transistor 3 and the transistor 4 are diodes, switching tubes with damping diodes or Insulated Gate Bipolar Transistors (IGBT) with the damping diodes.

## Patentansprüche

1. Überspannungsschutzschaltung, umfassend eine brückenlose Verstärkungs-Unterschaltung und eine Überspannungsschutz-Unterschaltung, wobei
die brückenlose Verstärkungs-Unterschaltung ein erstes Verbindungsende und ein zweites Verbindungsende einer Wechselstrom-Leistungsquelle, eine Induktionsspule 1, eine Induktionsspule 2, eine Schaltröhre 1 mit einer Dämpfungsdiode, eine Schaltröhre 2 mit einer Dämpfungsdiode, einen Kondensator 1, eine Diode 5 und eine Diode 6 umfasst; ein Ende der Induktionsspule 1 mit dem ersten Verbindungsende der Wechselstrom-Leistungsquelle verbunden ist, ein anderes Ende der Induktionsspule 1 mit einem positiven Pol der Diode 5 und einem negativen Pol der Schaltröhre 1 mit der Dämpfungsdiode verbunden ist, ein Ende der Induktionsspule 2 mit dem zweiten Verbindungsende der Wechselstrom-Leistungsquelle verbunden ist, ein anderes Ende der Induktionsspule 2 mit einem positiven Pol der Diode 6 und einem negativen Pol der Schaltröhre 2 mit der Dämpfungsdiode verbunden ist, ein Ende des Kondensators 1 mit einem negativen Pol der Diode 5 und einem negativen Pol der Diode 6 verbunden ist, und ein anderes Ende des Kondensators 1 mit einem positiven Pol der Schaltröhre 1 mit der Dämpfungsdiode und einem positiven Pol der Schaltröhre 2 mit der Dämpfungsdiode verbunden ist;
die Überspannungsschutz-Unterschaltung ein erstes Verbindungsende und ein zweites Verbindungsende einer Wechselstrom-Leistungsquelle, eine Diode 1, eine Diode 2, einen Transistor 3 und einen Transistor 4 umfasst; ein positiver Pol der Diode 1 mit dem ersten Verbindungsende der Wechselstrom-Leistungsquelle verbunden ist, ein positiver Pol der Diode 2 mit einem zweiten Verbindungsende der Wechselstrom-Leistungsquelle verbunden ist, ein negativer Pol des Transistors 3 mit dem ersten Verbindungsende der Wechselstrom-Leistungsquelle verbunden ist, und ein negativer Pol des Transistors 4 mit dem zweiten Verbindungsende der Wechselstrom-Leistungsquelle verbunden ist; und **dadurch gekennzeichnet, dass**,
die Überspannungsschutz-Unterschaltung weiter eine Überspannungspuffer-Vorrichtung umfasst, ein Ende der Überspannungspuffer-Vorrichtung mit einem negativen Pol der Diode 1 und einem negativen Pol der Diode 2 verbunden ist, und ein anderes Ende der Überspannungspuffer-Vorrichtung mit einem positiven Pol des Transistors 3 und einem positiven Pol des Transistors 4 verbunden ist; wobei die Überspannungspuffer-Vorrichtung ein Kondensator 2 und ein Widerstand 2 ist, die parallel sind.

2. Schaltung nach Anspruch 1, wobei
sowohl die Schaltröhre 1 mit der Dämpfungsdiode als auch die Schaltröhre 2 mit der Dämpfungsdiode eine N-Kanal-Metalloxidhalbleiter (MOS)-Röhre mit den Dämpfungsdioden sind.

3. Schaltung nach einem der Ansprüche 1 bis 2, wobei der Transistor 3 und der Transistor 4 Dioden sind.

4. Schaltung nach einem der Ansprüche 1 bis 2, wobei
der Transistor 3 und der Transistor 4 Schaltröhren mit den Dämpfungsdioden sind.

5. Schaltung nach Anspruch 4, wobei
die Schaltröhre mit der Dämpfungsdiode eine N-Kanal-MOS-Röhre mit der Dämpfungsdiode ist.

6. Schaltung nach einem der Ansprüche 1 bis 2, wobei der Transistor 3 und der Transistor 4 Bipolartransistoren mit isolierter Gate-Elektrode (IGBT) mit den Dämpfungsdioden sind.

7. Überspannungsschutzschaltung, umfassend eine Überspannungsschutz-Unterschaltung, wobei
die Überspannungsschutz-Unterschaltung ein erstes Verbindungsende und ein zweites Verbindungsende einer Wechselstrom-Leistungsquelle, eine Diode 1, eine Diode 2, einen Transistor 3 und einen Transistor 4 umfasst; ein positiver Pol der Diode 1 mit dem ersten Verbindungsende der Wechselstrom-Leistungsquelle verbunden ist, ein positiver Pol der Diode 2 mit einem zweiten Verbindungsende der Wechselstrom-Leistungsquelle verbunden ist, ein negativer Pol des Transistors 3 mit dem ersten Verbindungsende der Wechselstrom-Leistungsquelle verbunden ist, und ein negativer Pol des Transistors 4 mit dem zweiten Verbindungsende der Wechselstrom-Leistungsquelle verbunden ist; und **dadurch gekennzeichnet, dass**,
die Überspannungsschutz-Unterschaltung weiter eine Überspannungspuffer-Vorrichtung umfasst, ein Ende der Überspannungspuffer-Vorrichtung mit einem negativen Pol der Diode 1 und einem negativen Pol der Diode 2 verbunden ist, und ein anderes Ende der Überspannungspuffer-Vorrichtung mit einem positiven Pol des Transistors 3 und einem positiven Pol des Transistors 4 verbunden ist; wobei die Überspannungspuffer-Vorrichtung ein Kondensator 2 und ein Widerstand 2 ist, die parallel sind.

8. Schaltung nach Anspruch 7, wobei
der Transistor 3 und der Transistor 4 Dioden, Schaltröhren mit Dämpfungsdioden oder Bipolartransistoren mit isolierter Gate-Elektrode (IGBT) mit den Dämpfungsdioden sind.

## Revendications

1. Circuit de protection contre les surtensions, comprenant un sous-circuit survolteur sans pont et un sous-circuit de protection contre les surtensions, dans lequel,
le sous-circuit survolteur sans pont comprend une première extrémité de connexion et une seconde extrémité de connexion d'une source d'alimentation en courant alternatif, une bobine d'induction 1, une bobine d'induction 2, un tube de commutation 1 avec une diode d'amortissement, un tube de commutation 2 avec une diode d'amortissement, un condensateur 1, une diode 5, et une diode 6 ; une extrémité de la bobine d'induction 1 est connectée à la première extrémité de connexion de la source d'alimentation en courant alternatif, une autre extrémité de la bobine d'induction 1 est connectée à un pôle positif de la diode 5 et un pôle négatif du tube de commutation 1 avec la diode d'amortissement, une extrémité de la bobine d'induction 2 est connectée à la seconde extrémité de connexion de la source d'alimentation en courant alternatif, une autre extrémité de la bobine d'induction 2 est connectée à un pôle positif de la diode 6 et un pôle négatif du tube de commutation 2 avec la diode d'amortissement, une extrémité du condensateur 1 est connectée à un pôle négatif de la diode 5 et un pôle négatif de la diode 6, et une autre extrémité du condensateur 1 est connectée à un pôle positif du tube de commutation 1 avec la diode d'amortissement et un pôle positif du tube de commutation 2 avec la diode d'amortissement ;
le sous-circuit de protection contre les surtensions comprend une première extrémité de connexion et une seconde extrémité de connexion d'une source d'alimentation en courant alternatif, une diode 1, une diode 2, un transistor 3 et un transistor 4 ; un pôle positif de la diode 1 est connecté à la première extrémité de connexion de la source d'alimentation en courant alternatif, un pôle positif de la diode 2 est connecté à une seconde extrémité de connexion de la source d'alimentation en courant alternatif, un pôle négatif du transistor 3 est connecté à la première extrémité de connexion de la source d'alimentation en courant alternatif, et un pôle négatif du transistor 4 est connecté à la seconde extrémité de connexion de la source d'alimentation en courant alternatif ; et **caractérisé en ce que**,
le sous-circuit de protection contre les surtensions comprend en outre un dispositif tampon de surtension, une extrémité du dispositif tampon de surtension est connectée à un pôle négatif de la diode 1 et un pôle négatif de la diode 2, et une autre extrémité du dispositif tampon de surtension est connectée à un pôle positif du transistor 3 et un pôle positif du transistor 4 ; dans lequel le dispositif tampon de surtension est un condensateur 2 et une résistance 2 qui sont parallèles.

2. Circuit selon la revendication 1, dans lequel, le tube de commutation 1 avec la diode d'amortissement et le tube de commutation 2 avec la diode d'amortissement sont tous deux un tube à semiconducteurs métal oxyde (MOS) à canal N avec les diodes d'amortissement.

3. Circuit selon l'une quelconque des revendications 1 et 2, dans lequel,
le transistor 3 et le transistor 4 sont des diodes.

4. Circuit selon l'une quelconque des revendications 1 et 2, dans lequel,
le transistor 3 et le transistor 4 sont des tubes de commutation avec les diodes d'amortissement.

5. Circuit selon la revendication 4, dans lequel,
le tube de commutation avec la diode d'amortissement est un tube MOS à canal N avec la diode d'amortissement.

6. Circuit selon l'une quelconque des revendications 1 et 2, dans lequel,
le transistor 3 et le transistor 4 sont des transistors bipolaires à grille isolée (IGBT) avec les diodes d'amortissement.

7. Circuit de protection contre les surtensions, comprenant un sous-circuit de protection contre les surtensions, dans lequel,
le sous-circuit de protection contre les surtensions comprend une première extrémité de connexion et une seconde extrémité de connexion d'une source d'alimentation en courant alternatif, une diode 1, une diode 2, un transistor 3 et un transistor 4 ; un pôle positif de la diode 1 est connecté à la première extrémité de connexion de la source d'alimentation en courant alternatif, un pôle positif de la diode 2 est connecté à une seconde extrémité de connexion de la source d'alimentation en courant alternatif, un pôle négatif du transistor 3 est connecté à la première extrémité de connexion de la source d'alimentation en courant alternatif, et un pôle négatif du transistor 4 est connecté à la seconde extrémité de connexion de la source d'alimentation en courant alternatif ; et **caractérisé en ce que**,
le sous-circuit de protection contre les surtensions comprend en outre un dispositif tampon de surtension, une extrémité du dispositif tampon de surtension est connectée à un pôle négatif de la diode 1 et un pôle négatif de la diode 2, et une autre extrémité du dispositif tampon de surtension est connectée à un pôle positif du transistor 3 et un pôle positif du transistor 4 ; dans lequel, le dispositif tampon de surtension est un condensateur 2 et une résistance 2 qui sont parallèles.

8. Circuit selon la revendication 7, dans lequel, le transistor 3 et le transistor 4 sont des diodes, des tubes de commutation avec des diodes d'amortissement ou des transistors bipolaires à grille isolée (IGBT) avec les diodes d'amortissement.
